(19) Europäisches Patentamt / European Patent Office / Office européen des brevets

(11) **EP 3 433 952 B1**

(12) **EUROPEAN PATENT SPECIFICATION**

(45) Date of publication and mention of the grant of the patent:
**01.12.2021 Bulletin 2021/48**

(21) Application number: **16713911.2**

(22) Date of filing: **04.04.2016**

(51) Int Cl.:
**H04L 7/00** *(2006.01)*    **H04B 10/61** *(2013.01)*

(86) International application number:
**PCT/EP2016/057298**

(87) International publication number:
**WO 2017/174103 (12.10.2017 Gazette 2017/41)**

(54) **TIMING RECOVERY APPARATUS AND METHOD IN DIRECT-DETECTION RECEIVERS**

TAKTRÜCKGEWINNUNGSVORRICHTUNG UND -VERFAHREN IN DIREKTDETEKTIONSEMPFÄNGERN

APPAREIL ET PROCÉDÉ DE RÉCUPÉRATION DU RYTHME DANS DES RÉCEPTEURS DE DÉTECTION DIRECTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.01.2019 Bulletin 2019/05**

(73) Proprietor: **Huawei Technologies Co., Ltd.**
**Longgang District**
**Shenzhen, Guangdong 518129 (CN)**

(72) Inventors:
• **STOJANOVIC, Nebojsa**
  **80992 Munich (DE)**
• **XU, Chuan**
  **80992 Munich (DE)**

(74) Representative: **Thun, Clemens et al**
**Mitscherlich PartmbB**
**Patent- und Rechtsanwälte**
**Sonnenstraße 33**
**80331 München (DE)**

(56) References cited:
WO-A1-2014/194940    WO-A1-2016/012035
WO-A1-2016/012036    US-A1- 2012 213 510

**Description**

TECHNICAL FIELD

The invention relates to the field of optical transmission systems, and more particularly to direct detection optical receivers.

BACKGROUND

Most 10 Gb/s optical transmission systems using the standard third window (i.e., wavelength band between 1510 nm and 1600 nm) for transmitting data are deployed in dispersion-compensated links. Chromatic dispersion (CD) in that third window is often compensated using a combination of fibers with opposite signs of chromatic dispersion. More specifically, the chromatic dispersion compensation can be made by adding a length of fiber with a negative chromatic dispersion at a wavelength band to a system containing a fiber with a positive dispersion in that band. However, using dispersion compensating fibers (DCFs) causes some negative effects, such as higher noise, nonlinear effects and need of higher power.

Since several years, optical transmission without dispersion compensating fibers, such as coherent optical transmission at 40 Gb/s and 100 Gb/s, begins to be deployed in long haul optical networks in order to allow higher data rates to be sent over long haul optical transmission networks. Thanks to coherent detection and linear nature of chromatic dispersion, the chromatic dispersion is effectively compensated using enhanced digital signal processing (DSP), but the implementation of such a solution is significantly impeded by the excessive cost of coherent transceivers.

Thus, it is preferred to use cheaper techniques to transmit high baud rate data in short optical links without dispersion compensating fibers. Nevertheless, the main problem in such systems is the phenomenon of dispersion, such as modal dispersion (MD), chromatic dispersion (CD) and polarization mode dispersion (PMD), whose overall effect on the performance of the optical fiber is known as inter-symbol interference (ISI), which degrades not only the quality and the performance of the signal but also the quality of the extracted clock tone.

At the transmitter side, several cheap techniques for transmitting 10 Gb/s data over optical links without dispersion compensating fibers include on-off keying (OOK) technique, duo-binary transmission or chirp-managed directly modulated laser (CML) technique, the OOK technique being the cheapest but providing the poorest performance in longer links.

At the receiver side, in optical links without dispersion compensating fibers, the signal suffering from the phenomenon of dispersion must be equalized. The receiver may use feed-forward equalizer (FFE), decision feedback equalizer (DFE), maximum likelihood sequence estimator (MLSE) or a combination thereof. However, FFE suffers from noise enhancement and DFE from error multiplication, while MLSE represents the best and costliest solution.

WO 2016/012035 A1 refers to an apparatus for synchronizing a sampling signal on a communication signal, the communication signal comprising communication symbols, the sampling signal indicating sampling time instants of the communication signal, the apparatus comprising a sampler being configured to sample the communication signal at the sampling time instants indicated by the sampling signal to obtain a sampled communication signal, a filter being configured to filter the sampled communication signal using a first filtering transfer function to obtain a first filtered sampled communication signal, and to filter the sampled communication signal using a second filtering transfer function to obtain a second filtered sampled communication signal, a phase detector being configured to determine a first phase detection signal upon the basis of the first filtered sampled communication signal, and to determine a second phase detection signal upon the basis of the second filtered sampled communication signal, the first phase detection signal indicating a position of a sampling time instant within a communication symbol of the first filtered sampled communication signal, the second phase detection signal indicating a position of a sampling time instant within a communication symbol of the second filtered sampled communication signal, a determiner being configured to determine a first synchronicity measure upon the basis of the first phase detection signal, and to determine a second synchronicity measure upon the basis of the second phase detection signal, the first synchronicity measure and the second synchronicity measure indicating a synchronicity between the sampling signal and the communication signal, and a selector being configured to select the first filtering transfer function or the second filtering transfer function of the filter for filtering the sampled communication signal upon the basis of the first synchronicity measure and the second synchronicity measure for synchronizing the sampling signal on the communication signal.

WO 2014/194940A1 refers to a coherent optical receiver comprising: analog-to-digital conversion means configured for sampling an analog coherent optical signal into a digital coherent optical signal; channel equalization means configured for equalizing the digital coherent optical signal; channel transfer function calculation means configured for calculating a channel transfer function based on the digital coherent optical signal and the equalized digital coherent optical signal interpolated by interpolation means and configured for adjusting the channel equalization means based on the calculated channel transfer function; phase detection means configured for providing a timing error detection characteristic, TEDC, signal, based on the equalized digital coherent optical signal; feed- backward timing recovery means configured for adjusting the sampling of the analog-to-digital conversion means based on the TEDC signal with respect to a frequency offset compensation criterion; and feed-forward timing recovery means configured for adjusting the interpolation means with respect to a phase offset compensation criterion.

WO 2016/012036A1 refers to a timing recovery apparatus for receivers. The apparatus includes a feedback loop with two parallel branches, each branch having an interpolation filter and a phase detector. The feedback loop additionally includes a combiner to combine a signal from each of the branches.

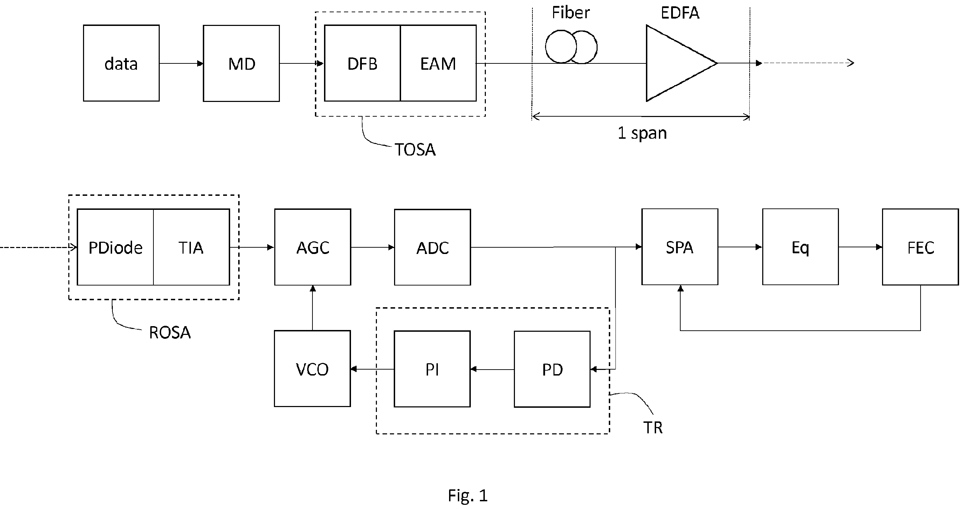

Fig. 1 shows a conventional direct detection 10 Gb/s optical transmission system.

At the transmitter side, the data are amplified through a modulator driver (MD). The amplified data are then modulated through a distributed feedback (DFB) laser together with an electro-absorption modulator (EAM), which are usually integrated in transmit optical subassemblies (TOSA). The modulated amplified data are afterwards transmitted over several spans consisting individually of fiber and erbium-doped fiber amplifier (EDFA) to an optical front end (OFE) of the receiver.

At the receiver side, a PIN photodiode or an avalanche photodiode (APD) detects the optical signal and converts it to an electrical signal. The output of the photodiode (PDiode), which is proportional to the optical signal power, is then amplified through a trans-impedance amplifier (TIA) that is usually integrated together with the photodiode in receive optical subassemblies (ROSA). The amplified electrical signal may afterwards be transmitted to an automatic gain control circuit (AGC) to be adjusted to the input of an analog-to-digital converter (ADC) when electronic equalization is used. The AGC monitors signal power variations and produces an almost constant signal swing that fits into the ADC input range. Indeed, to prevent the signals suffering from chromatic dispersion from being clipped, it is preferable to have rather large signals, which leads to a selective ADC input range. After converting from an analog to a digital domain through the analog-to-digital converter, the resulting digital signal that suffers from noise and inter-symbol interference is received at an equalizer (Eq), such as a MLSE.

However, before activating the equalizer, the local oscillator, i.e., the receiver oscillator, must be locked to the transmitter oscillator responsible for data clocking. More specifically, those two oscillators must be synchronized while allowing small deviations, as it is impossible to perfectly track the transmitter clock source. To this extent, a digital signal that contains timing information is provided to a phase detector (PD) (e.g., a Mueller-Muller phase detector (MMPD), an Alexander phase detector (APD), or a Gardner phase detector (GPD)) within a timing recovery (TR) circuit. The clock extraction is then carried out using the phase detector that outputs the timing information, e.g., whether the sampling clock is higher or lower. Since that information is noisy due to pattern-dependent noise, noise caused by amplifiers and other component imperfections, it must be filtered through a filter (e.g., a proportional-integral (PI) filter) within the timing recovery circuit before entering the receiver oscillator (e.g., a voltage-controlled oscillator (VCO)).

Furthermore, the clock phase of the receiver oscillator can be adjusted using a sampling phase adjustment (SPA) circuit whose sampling phase can be controlled and optimally adjusted through a forward error correction (FEC) by seeking to minimize the number of FEC input errors.

Nevertheless, such a timing recovery circuit remains strongly influenced by the inter-symbol interference (ISI) related to high chromatic dispersion, which degrades not only the quality and the performance of the signal but also the quality of the clock tone extracted by the timing recovery circuit. In particular, this problem is more serious than using some equalization techniques to cope with ISI. For example, in 10 Gb/s OOK systems, a MLSE can equalize a signal from 300 km link while the clock tone of most conventional phase detectors disappears after 100 km. Thus, at the receiver side, the clock must be first extracted and then one equalizes the digital signal. In addition, a huge ISI generates a large jitter and the receivers are extremely prone to symbol slips.

## SUMMARY

It is therefore an object of the present invention to provide a method, a system and an apparatus for recovering a timing information from a signal of a direct detection receiver in a transmission system, by means of which an enhanced clock extraction from a noisy and dispersive optical signal can be performed in extremely band-limited systems, such as systems of bandwidth smaller than a quarter of baud rate.

The object is achieved by the features of the independent claims. Further embodiments of the invention are apparent from the dependent claims, the description and the figures.

According to a first aspect, the invention relates to a method for recovering timing from a signal of a receiver in a transmission system, the method comprising the following steps of obtaining a first sampling phase (a1), obtaining a first timing control signal (a2), selecting a first and second finite impulse response filter amongst a plurality of selectable finite impulse response filters (b1), calculating the coefficients of a first and second filter in order to obtain an adjusted first and second filter (b2), obtaining a second sampling phase using the selected first and second finite impulse response filters and the adjusted first filter (c1) and obtaining a second timing control signal using the selected first and second finite impulse response filters and the adjusted first and second filters (c2).

Thereby, an enhanced timing control signal and therefore an enhanced clock tone can be obtained by adequately selecting the finite impulse response filters and adequately calculating the coefficients of the filters.

According to a first implementation of the method according to the first aspect, the step of obtaining a first sampling phase (a1) comprises in a first path, receiving an input signal, filtering the input signal, converting the filtered input signal to a first phase signal and filtering the first phase signal, and in a second path parallel to the first path, receiving the input signal, converting the input signal to a quadrature-phase signal, filtering the quadrature-phase signal, converting the filtered quadrature-phase signal to a second phase signal and filtering the second phase signal. The step of obtaining a first sampling phase (a1) further comprises determining an angle between the first phase signal and the second phase signal, outputting an angle signal derived from the determined angle, unwrapping the phase value of the angle signal through a limited unwrapping transfer function, filtering the unwrapped angle signal, accumulating the filtered unwrapped angle signal and outputting the first sampling phase to an interpolator based on the accumulated filtered unwrapped angle signal.

Thereby, a first sampling phase can be obtained.

According to a second implementation of the method according to the first implementation of the first aspect, the step of obtaining a first timing control signal (a2) comprises filtering the accumulated filtered unwrapped angle signal and outputting the first timing control signal.

Thereby, a first timing control signal can be obtained and a clock generation can afterwards be performed through an oscillator receiving the first timing control signal.

According to a third implementation of the method according to the first aspect, the step of selecting a first and second finite impulse response filter amongst a plurality of selectable finite impulse response filters (b1) comprises in a first path, receiving an input signal, estimating a jitter using a first selectable finite impulse response filter amongst the plurality of selectable finite impulse response filters and outputting an estimated jitter signal, and in a second path parallel to the first path, receiving the input signal, estimating a slope of a timing error detector characteristic (TEDC) using a second selectable finite impulse response filter amongst the plurality of selectable finite impulse response filters and outputting an estimated TEDC slope signal. The step of selecting a first and second finite impulse response filter amongst a plurality of selectable finite impulse response filters (b1) further comprises multiplying the estimated TEDC slope signal by a predetermined weighting coefficient and calculating the following mathematical formula: $\sqrt{\overline{(A - \overline{A})^2}/\overline{B}}$ , where A denotes the estimated jitter signal and B denotes the resulting signal of multiplying the estimated TEDC slope signal by a predetermined weighting coefficient, and selecting as the selected first and second finite impulse response filters, the respective first and second selectable finite impulse response filters amongst the plurality of selectable finite impulse response filters that enable to obtain a minimum value of the above mathematical formula.

Thereby, the selection can be based on a jitter estimation in the first path and a phase detector gain or TEDC slope estimation in the second path. The predetermined weighting coefficient enables to obtain a more accurate estimation of the phase detector gain or timing error detector characteristic (TEDC) slope, and an optimization of the selection of the first and second finite impulse response filters can be obtained. Thus, the jitter can be minimized and that selection process then allows an enhanced clock extraction in extremely band-limited systems and in systems suffering from strong chromatic dispersion (CD) and strong polarization mode dispersion (PMD).

According to a fourth implementation of the method according to the third implementation of the first aspect, the step of calculating the coefficients of a first and second filter in order to obtain an adjusted first and second filter (b2) comprises calculating the coefficients of the first and second filters based on the estimated slope of the TEDC obtained by using the selected second finite impulse response filter.

Thereby, the adjustment of the coefficients of the first and second filters can be obtained. Thus, the jitter can be minimized and that adjustment process in addition to the selection process then allows an optimized clock extraction in extremely band-limited systems and in systems suffering from strong chromatic dispersion (CD) and strong polarization mode dispersion (PMD).

According to a fifth implementation of the method according to the third implementation of the first aspect, the step of estimating a jitter comprises filtering the input signal through the first selectable finite impulse response filter, converting the filtered input signal to a first phase signal and averaging the first phase signal into an averaged first phase signal, the averaged first phase signal corresponding to the estimated jitter signal, and the step of estimating a slope of a timing error detector characteristic (TEDC) comprises shifting the input signal by a predetermined portion of its time period, filtering the shifted input signal through the second selectable finite impulse response filter, converting the filtered shifted input signal to a second phase signal and averaging the second phase signal into an averaged second phase signal, the averaged second phase signal corresponding to the estimated TEDC slope signal.

Thereby, the jitter and TEDC slope (or phase detector gain) estimations can be more accurate through averaging the respective first and second phase signals.

According to a sixth implementation of the method according to the first aspect, the step of obtaining a second sampling phase using the selected first and second finite impulse response filters and the adjusted first filter (c1) comprises in a first path, receiving an input signal, estimating a jitter and outputting an estimated jitter signal, and in a second path parallel to the first path, receiving the input signal, estimating a slope of a timing error detector characteristic (TEDC) and outputting an estimated TEDC slope signal. The step of obtaining a second sampling phase using the selected first and second finite impulse response filters and the adjusted first filter (c1) further comprises normalizing the estimated jitter signal with respect to the estimated TEDC slope signal in order to obtain a unity slope of the TEDC, receiving the normalized estimated jitter signal at the adjusted first filter, filtering the normalized estimated jitter signal through the adjusted first filter, accumulating the filtered normalized estimated jitter signal, receiving the accumulated filtered normalized estimated jitter signal at a controller and controlling the second sampling phase of an interpolator through the controller.

Thereby, the first path enables a jitter estimation and the second path enables a phase detector gain or TEDC slope estimation. Thanks to the normalization process based on both the jitter estimation and the TEDC slope estimation, the method allows to thus face possible channel variations without being affected.

According to a seventh implementation of the method according to the sixth implementation of the first aspect, the step of obtaining a second timing control signal using the selected first and second finite impulse response filters and the adjusted first and second filters (c2) comprises receiving the accumulated filtered normalized estimated jitter signal at the adjusted second filter, filtering the accumulated filtered normalized estimated jitter signal through the adjusted second filter and outputting the second timing control signal from the adjusted second filter.

Thereby, an enhanced second timing control signal can be obtained and an optimized clock generated afterwards by an oscillator receiving the second timing control signal can be obtained.

According to an eight implementation of the method according to the sixth implementation of the first aspect, the step of estimating a jitter comprises filtering the input signal through the selected first finite impulse response filter and converting the filtered input signal to a phase signal, and the step of estimating a slope of a timing error detector characteristic (TEDC) comprises shifting the input signal by a predetermined portion of its time period, filtering the shifted input signal through the selected second finite impulse response filter and converting the filtered shifted input signal to a phase signal.

Thereby, a more accurate jitter estimation and phase detector gain or TEDC slope estimation can be obtained.

The above object is also solved in accordance with a second aspect.

According to the second aspect, the invention relates to a method for recovering timing from a signal of a receiver in a multi-wavelength transmission system having a plurality of channels, the method comprising the following steps of applying the steps of obtaining a first sampling phase (a1) and a first timing control signal (a2) of the first aspect to a single channel amongst the plurality of channels in order to respectively obtain a first sampling phase and a first timing control signal, applying the step of obtaining a first sampling phase (a1) of the first aspect to each one of the other channels amongst the plurality of channels in order to obtain a respective first sampling phase, applying the steps of selecting a first and second finite impulse response filter amongst a plurality of selectable finite impulse response filters (b1) and calculating the coefficients of a first and second filter in order to obtain an adjusted first and second filter (b2) of the first aspect to each one of the channels amongst the plurality of channels in order to obtain respective selected first and second finite impulse response filters and respective adjusted first and second filters, applying the steps of obtaining a second sampling phase using the selected first and second finite impulse response filters and the adjusted first filter (c1) and a second timing control signal using the selected first and second finite impulse response filters and the adjusted first and second filters (c2) of the first aspect to the single channel amongst the plurality of channels in order to respectively obtain a second sampling phase and a second timing control signal, and applying the step of obtaining a second sampling phase using the selected first and second finite impulse response filters and the adjusted first filter (c1) of the first aspect to each one of the other channels amongst the plurality of channels in order to obtain a respective second sampling phase.

Thereby, a single enhanced second timing recovery signal with respect to the first timing recovery signal can be obtained.

According to a first implementation of the method according to the second aspect, each one of the channels comprises a respective analog-to-digital converter and the receiver comprises a single oscillator, the single oscillator receiving the first timing control signal and the second timing control signal in replacement of the first timing control signal and generating a first clock signal and a second clock in replacement of the first clock signal to be distributed to each analog-to-digital converter.

Thereby, a single enhanced clock can be obtained in all the channels while further allowing more data traffic and saving several oscillators since a single oscillator is used.

The above object is also solved in accordance with a third aspect.

According to the third aspect, the invention relates to a system for recovering timing from a signal of a receiver in a transmission system, the system comprising a first apparatus adapted to obtain a first sampling phase and a first timing control signal, a selection unit adapted to select a first and second finite impulse response filter amongst a plurality of selectable finite impulse response filters and adapted to calculate the coefficients of a first and second filter in order to obtain an adjusted first and second filter and a second apparatus adapted to obtain a second sampling phase using the selected first and second finite impulse response filters and the adjusted first filter and adapted to obtain a second timing control signal using the selected first and second finite impulse response filters and the adjusted first and second filters.

Thereby, an enhanced timing control signal and therefore an enhanced clock tone can be obtained by adequately selecting the finite impulse response filters and adequately calculating the coefficients of the filters.

According to a first implementation of the system according to the third aspect, the first apparatus comprises a first path, the first path receiving an input signal and comprising a third finite impulse response filter adapted to filter the input signal, a first phase detector adapted to convert the filtered input signal to a first phase signal and a first infinite impulse response filter adapted to filter the first phase signal, and a second path parallel to the first path, the second path receiving the input signal and comprising a quadrature circuit adapted to convert the input signal to a quadrature-phase signal, a fourth finite impulse response filter adapted to filter the quadrature-phase signal, a second phase detector adapted to convert the filtered quadrature-phase signal to a second phase signal and a second infinite impulse response filter adapted to filter the second phase signal. The first apparatus further comprises an angle detector adapted to determine an angle between the first phase signal and the second phase signal and output an angle signal derived from the determined angle, an unwrapper adapted to unwrap the phase value of the angle signal through a limited unwrapping transfer function, a third filter adapted to filter the unwrapped angle signal, a first integrator adapted to accumulate the filtered unwrapped angle signal and output the first sampling phase to an interpolator based on the accumulated filtered unwrapped angle signal, the interpolator being adapted to interpolate at the first sampling phase a digital signal received at the receiver into a first interpolated signal and the first interpolated signal corresponding to the input signal received at the first and second path, and a fourth filter adapted to filter the accumulated filtered unwrapped angle signal and output the first timing control signal.

Thereby, a first sampling phase and a first timing control signal can be obtained.

According to a second implementation of the system according to the first implementation of the third aspect, the selection unit comprises a third path, the third path receiving the first interpolated signal and comprising a first jitter estimator adapted to estimate a jitter and output an estimated first jitter signal, the first jitter estimator comprising a first selectable finite impulse response filter to be tested amongst the plurality of selectable finite impulse response filters, and a fourth path parallel to the third path, the fourth path receiving the first interpolated signal and comprising a first timing error detector characteristic (TEDC) slope estimator adapted to estimate a slope of the TEDC and output a first estimated TEDC slope signal, the first TEDC slope estimator comprising a second selectable finite impulse response filter to be tested amongst the plurality of selectable finite impulse response filters. The selection unit further comprises a multiplier adapted to multiply the first estimated TEDC slope signal by a predetermined weighting coefficient, a first calculator adapted to calculate the following mathematical formula: $\sqrt{\overline{(A - \overline{A})^2}/\overline{B}}$ , where A denotes the first estimated jitter signal and B denotes the resulting signal of multiplying the first estimated TEDC slope signal by a predetermined weighting coefficient, and a selector adapted to receive the calculation result of the first calculator and select as the selected first and second finite impulse response filters, the respective first and second selectable finite impulse response filters amongst the plurality of selectable finite impulse response filters that enable to obtain a minimum value of the above mathematical formula.

Thereby, the selection can be based on a jitter estimation in the third path and a phase detector gain or TEDC slope estimation in the fourth path. The predetermined weighting coefficient enables to obtain a more accurate estimation of the phase detector gain or timing error detector characteristic (TEDC) slope, and an optimization of the selection of the first and second finite impulse response filters can be obtained. Thus, the jitter can be minimized and that selection process then allows an enhanced clock extraction in extremely band-limited systems and in systems suffering from strong chromatic dispersion (CD) and strong polarization mode dispersion (PMD).

According to a third implementation of the system according to the second implementation of the third aspect, the selection unit further comprises a second calculator adapted to calculate the coefficients of the first and second filters based on the first estimated slope of the TEDC obtained by using the selected second finite impulse response filter.

Thereby, the adjustment of the coefficients of the first and second filters can be obtained. Thus, the jitter can be minimized and that adjustment process in addition to the selection process then allows an optimized clock extraction in extremely band-limited systems and in systems suffering from strong chromatic dispersion (CD) and strong polarization mode dispersion (PMD).

According to a fourth implementation of the system according to the second implementation of the third aspect, the first selectable finite impulse response filter to be tested is adapted to filter the first interpolated signal, the first jitter estimator further comprises a third phase detector adapted to convert the filtered first interpolated signal to a third phase signal and a first low-pass filter adapted to average the third phase signal into an averaged third phase signal, the averaged third phase signal corresponding to the first estimated jitter signal, and the first timing error detector characteristic (TEDC) slope estimator further comprises a first time shifter adapted to shift the first interpolated signal by a predetermined portion of its time period, the second selectable finite impulse response filter to be tested being adapted to filter the shifted first interpolated signal, a fourth phase detector adapted to convert the filtered shifted first interpolated signal to a fourth phase signal and a second low-pass filter adapted to average the fourth phase signal into an averaged fourth phase signal, the averaged fourth phase signal corresponding to the first estimated TEDC slope signal.

Thereby, the jitter and TEDC slope (or phase detector gain) estimations can be more accurate through averaging the respective third and fourth phase signals.

According to a fifth implementation of the system according to the fourth implementation of the third aspect, the second apparatus comprises a fifth path, the fifth path receiving a second interpolated signal and comprising a second jitter estimator adapted to estimate a second jitter and output a second estimated jitter signal, and a sixth path parallel to the fifth path, the sixth path receiving the second interpolated signal and comprising a second timing error detector characteristic (TEDC) slope estimator adapted to estimate a slope of the TEDC and output a second estimated TEDC slope signal. The second apparatus further comprising a processor adapted to normalize the second estimated jitter signal with respect to the second estimated TEDC slope signal in order to obtain a unity slope of the TEDC, the adjusted first filter adapted to filter the normalized second estimated jitter signal, a second integrator adapted to accumulate the filtered normalized second estimated jitter signal and a controller adapted to receive the accumulated filtered normalized second estimated jitter signal and control the second sampling phase of the interpolator, the interpolator outputting at the second sampling phase the second interpolated signal received at the fifth and sixth path.

Thereby, the fifth path enables a jitter estimation and the sixth path enables a phase detector gain or TEDC slope estimation. Thanks to the normalization process based on both the jitter estimation and the TEDC slope estimation, the system can thus face possible channel variations without being affected.

According to a sixth implementation of the system according to the fifth implementation of the third aspect, the second apparatus further comprises the adjusted second filter adapted to filter the accumulated filtered normalized second estimated jitter signal and output the second timing control signal.

Thereby, an enhanced second timing control signal can be obtained and an optimized clock generated afterwards by an oscillator receiving the second timing control signal can be obtained.

According to a seventh implementation of the system according to the fifth implementation of the third aspect, the second jitter estimator comprises a fifth phase detector adapted to convert the filtered second interpolated signal to a fifth phase signal, the fifth phase signal corresponding to the second estimated jitter signal, and the second TEDC slope estimator comprises a second time shifter adapted to shift the second interpolated signal by a predetermined portion of its time period, the selected second finite impulse response filter adapted to filter the shifted second interpolated signal, a sixth phase detector adapted to convert the filtered shifted second interpolated signal to a sixth phase signal and a third low-pass filter adapted to average the sixth phase signal into an averaged sixth phase signal, the averaged sixth phase signal corresponding to the second estimated TEDC slope signal.

Thereby, a more accurate jitter estimation and phase detector gain or TEDC slope estimation can be obtained.

According to an eight implementation of the system according to the fifth implementation of the third aspect, the second interpolated signal is received at an equalizer adapted to equalize the second interpolated signal.

Thereby, the equalizer can be activated upon receiving the second interpolated signal.

The above object is also solved in accordance with a fourth aspect.

According to the fourth aspect, the invention relates to an apparatus for adaptively recovering timing from a signal of a receiver in a transmission system, the apparatus comprising a first path, the first path receiving an input signal and comprising a jitter estimator adapted to estimate a jitter and output an estimated jitter signal, and a second path parallel to the first path, the second path receiving the input signal and comprising a timing error detector characteristic (TEDC) slope estimator adapted to estimate a slope of the TEDC and output an estimated TEDC slope signal. The apparatus further comprises a processor adapted to normalize the estimated jitter signal with respect to the estimated TEDC slope signal in order to obtain a unity slope of the TEDC, an adjustable first filter adapted to filter the normalized estimated jitter signal, an integrator adapted to accumulate the filtered normalized estimated jitter signal and a controller adapted to receive the accumulated filtered normalized estimated jitter signal and control a sampling phase of the interpolator, the interpolator outputting at the sampling phase the interpolated signal received at the first and second path.

Thereby, a sampling phase can be obtained and optimized by adjusting the first filter through any adequate adjustment process.

According to a first implementation of the apparatus according to the fourth aspect, the apparatus further comprises an adjustable second filter adapted to filter the accumulated filtered normalized estimated jitter signal and output a timing control signal.

Thereby, a timing control signal can be obtained and optimized by selecting the first and second filters through any adequate selection process.

According to a second implementation of the apparatus according to the first implementation of the fourth aspect, the jitter estimator comprises a selectable first finite impulse response filter adapted to filter the interpolated signal and a first phase detector adapted to convert the filtered interpolated signal to a first phase signal, the first phase signal corresponding to the estimated jitter signal, and the TEDC slope estimator comprises a time shifter adapted to shift the interpolated signal by a predetermined portion of its time period, a selectable second finite impulse response filter adapted to filter the shifted interpolated signal, a second phase detector adapted to convert the filtered shifted interpolated signal to a second phase signal and a low-pass filter adapted to average the second phase signal into an averaged second phase signal, the averaged second phase signal corresponding to the estimated TEDC slope signal.

Thereby, the sampling phase can be optimized by adjusting the first filter and selecting the first and second filters through any adequate adjustment and selection processes. On the other hand, the timing control signal can be optimized by adjusting the first and second filters and selecting the first and second filters through any adequate adjustment and selection processes.

The above object is also solved in accordance with a fifth aspect.

According to a fifth aspect, the invention relates to a computer program comprising program code for performing the method according to any one of the first and second aspects or any one of their respective implementation forms when executed on a computer. Thereby, the method can be performed in an automatic and repeatable manner.

The computer program can be performed by any one of the apparatuses. The apparatuses can be programmably arranged to perform the computer program.

Embodiments of the invention can be implemented in hardware, software or in any combination thereof.

It shall further be understood that a preferred embodiment of the invention can also be any combination of the dependent claims or above embodiments with the respective independent claim.

These and other aspects of the invention will be apparent and elucidated with reference to the embodiments described hereinafter.

BRIEF DESCRIPTION OF THE DRAWINGS

In the following detailed portion of the present disclosure, the invention will be explained in more detail with reference to the exemplary embodiments shown in the drawings, in which:

Fig. 1       shows a conventional direct detection 10 Gb/s optical transmission system;

Fig. 2       shows a block diagram of a timing recovery circuit according to a first embodiment of the present invention;

Fig. 3       shows a block diagram of a selection circuit according to a second embodiment of the present invention;

Fig. 4       shows a block diagram of a timing recovery circuit according to a third embodiment of the present invention;

Fig. 4A      shows a block diagram of a controller according to a fourth embodiment of the present invention;

Fig. 5       shows a block diagram of an adaptive timing recovery circuit according to a fifth embodiment of the present invention;

Fig. 6       shows a schematic flow diagram for recovering timing from a signal of a receiver in a transmission system according to a sixth embodiment of the present invention;

Fig. 7       shows an explanatory block diagram of a timing recovery system according to a seventh embodiment of the present invention;

Fig. 8       shows a parallel implementation of finite impulse response filters and phase detectors when a two-fold oversampling is employed according to an eight embodiment of the present invention;

Fig. 9       shows a block diagram of a timing recovery circuit of a receiver in a multi-wavelength transmission system having a plurality of channels according to a ninth embodiment of the present invention; and

Fig. 10      shows a schematic flow diagram for recovering timing from a signal of a receiver in a multi-wavelength transmission system having a plurality of channels according to a tenth embodiment of the present invention.

Identical reference signs are used for identical or at least functionally equivalent features.

DETAILED DESCRIPTION OF EMBODIMENTS OF THE INVENTION

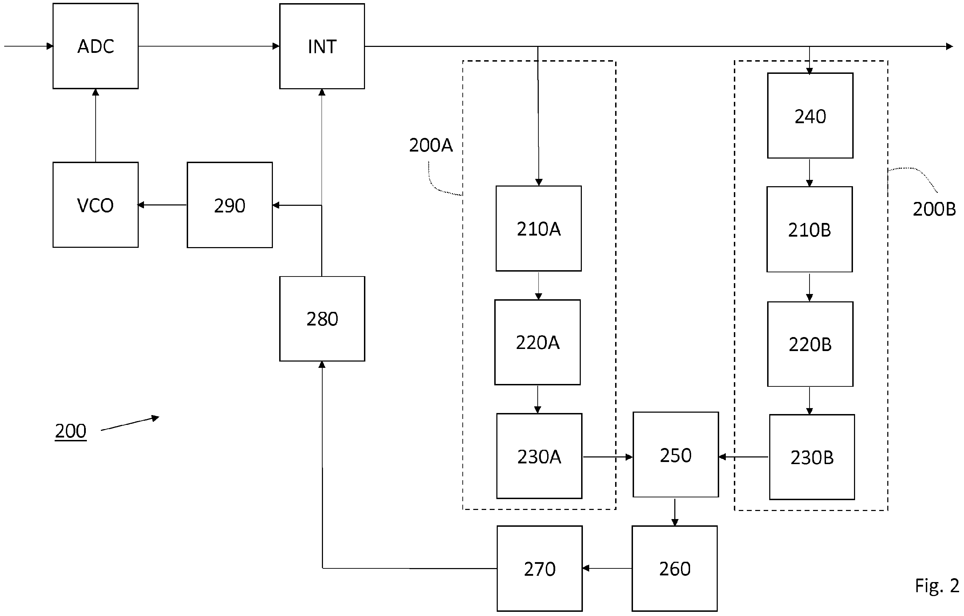

Fig. 2 shows a block diagram of a timing recovery (TR) circuit 200 of a receiver in a transmission system. The TR circuit 200 comprises a first path 200A and a second path 200B parallel to the first path 200A, through which an input signal passes. The input signal of the TR circuit 200 can be an electrical digital signal (e.g., output from an analog-to-digital converter (ADC) as depicted in Fig. 2) passing for example through an interpolator (INT) to be interpolated at a sampling phase provided by an output of the TR circuit 200. The first path 200A comprises a finite impulse response (FIR) filter 210A, a phase detector (PD) 220A and an infinite impulse response (IIR) filter 230A. On the other hand, the second path 200B comprises a quadrature circuit 240, a finite impulse response filter 210B, a phase detector 220B and an infinite impulse response filter 230B. In addition, the TR circuit 200 comprises an angle detector 250, an unwrapper 260, an inner filter 270, an integrator 280 and an outer filter 290.

The coefficients of the FIR filters 210A, 210B are selected depending on the channel conditions, such as fiber parameters, link length and optical signal-to-noise ratio (OSNR), in order to enable the frequency and phase acquisition within the predefined noise and inter-symbol interference (ISI) working range.

The FIR filter 210A of the first path 200A receives and filters the in-phase component of the input signal of the TR circuit 200, whereas the FIR filter 210B of the second path 200B receives and filters the quadrature-phase component of the input signal of the TR circuit 200. The quadrature-phase component can be obtained through the quadrature circuit 240, such as an interpolator, to shift the input signal of the TR circuit 200 by a quarter of its time period (T), i.e. by T/4. The resulting filtered input signals (x) are then respectively sent to the PDs 220A, 220B to be converted to a respective phase signal (y) according the following equation:

$$y(n) = abs(x(n))^k \, sign\big(x(n)\big) \, sign\big(x(n+2)\big) - abs(x(n+2))^k \, sign\big(x(n+2)\big) \, sign\big(x(n)\big)$$

(1)

where y denotes the output signal of the respective PDs 220A, 220B, x denotes the input signal of the respective PDs 220A, 220B, the input signal x being samples at a distance of a half period of the symbol period (i.e., of T/2), n denotes a sampling instant and k denotes a selectable parameter to minimize jitter. Each PD 220A, 220B uses one sample per symbol and the parameter k is selected by considering the channel conditions, such as fiber parameters, link length and OSNR, so that the values of k can, for example, be chosen in the range from 0.5 to 2.

In turn, the phase signals (y) are respectively sent to the IIR filters 230A, 230B, such as first-order IIR filters, to be filtered and the respective resulting output signals are processed through the angle detector 250 to determine an angle of a complex signal between those two output signals, the angle ranging in value from 0 to $2\pi$ radians.

Based on the determined angle, the angle detector 250 outputs an angle signal that is sent to the unwrapper 260 with the aim of avoiding any cycle slips. The phase value of the angle signal is thus unwrapped through a limited unwrapping transfer function that hinders some negative effects caused by any uncontrolled large frequency offsets.

The resulting unwrapped signal is filtered by the inner filter 270, such as a proportional-integral (PI) filter, and the resulting filtered signal is then accumulated in the integrator 280, such as a phase accumulator of a numerically controlled oscillator (NCO).

The output signal of the integrator 280 is sent to both the interpolator (INT) in order to control its sampling phase, thereby forming an "inner" feedback loop, and also the outer filter 290, thereby forming an "outer" feedback loop.

It should be noted that the integrator 280 and the interpolator (INT) can be part of a NCO whose function consists of correcting for fast signal phase variations mainly caused by the imperfections of the transmitter clock source within the optical transceiver. Furthermore, while each PD 220A, 220B uses one sample per symbol, the interpolator (INT) may require more than one sample per symbol to provide acceptable interpolation performance. For example, the interpolator (INT) can use 1.25 or more samples per symbol.

The signal received at the outer filter 290 is then filtered to obtain a timing control signal, which can afterwards be sent to an oscillator, such as a voltage-controlled oscillator (VCO), as depicted in Fig. 2, to control its phase and its frequency. In turn, the oscillator, e.g., the VCO, can generate a clock to be provided to the ADC.

As can be gathered from the above, the "inner" feedback loop enables to track the fast signal phase variations, while the "outer" feedback loop enables to acquire the frequency offset between the respective oscillators, e.g., the VCOs, at the transmitter and receiver side. In addition, the communication with the oscillator, e.g., the VCO, is often performed by a synchronous serial data protocol, such as a serial peripheral interface (SPI). For all those reasons, the "inner" feedback loop is configured to operate faster than the "outer" feedback loop.

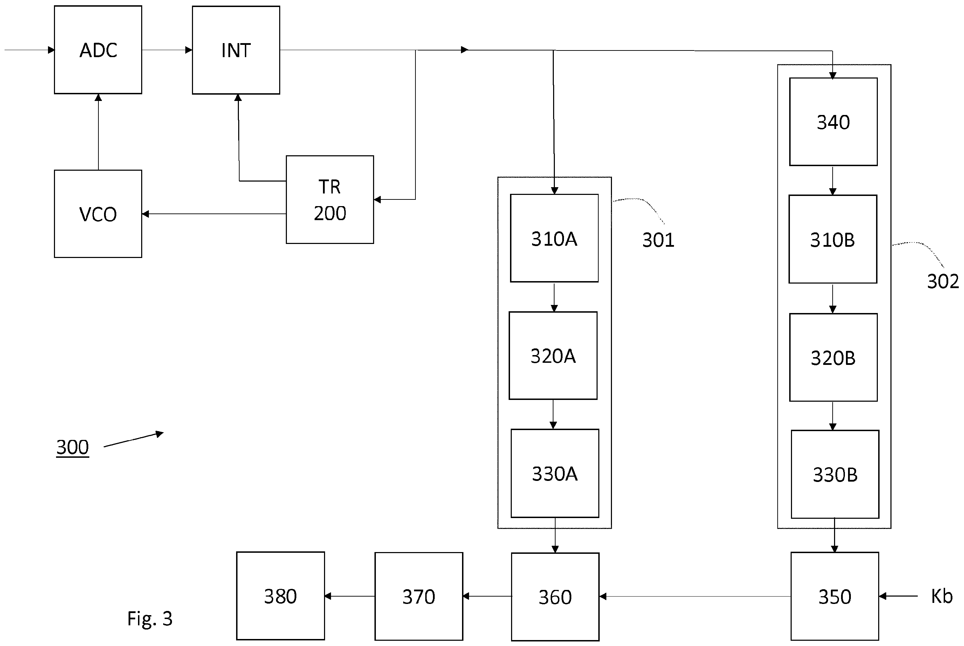

Fig. 3 shows a block diagram of a selection circuit 300 configured to operate a selection after obtaining the timing control signal as obtained through the timing recovery (TR) circuit 200 of Fig. 2. The selection circuit 300 comprises a first path 300A and a second path 300B parallel to the first path 300A, through which the input signal of the TR circuit 200 passes, i.e., the output signal provided by the interpolator (INT), after the operation of the TR circuit 200 of obtaining the timing control signal. The first path 300A comprises a jitter estimator 301 adapted to estimate a jitter and output an estimated jitter signal, which in turn comprises a finite impulse response (FIR) filter 310A, a phase detector (PD) 320A and a low-pass filter (LPF) 330A. On the other hand, the second path 300B comprises a timing error detector characteristic (TEDC) slope estimator 302 adapted to estimate a slope of the TEDC (i.e., a value of the coefficient Kpd) or a phase detector (PD) gain (i.e., a value of the coefficient Kpd) and output an estimated TEDC slope signal, which in turn comprises a time shifter 340, a finite impulse response filter 310B, a phase detector 320B and a low-pass filter 330B. In addition, the selection circuit 300 comprises a multiplier 350, a first calculator 360, a selector 370 and a second calculator 380.

The FIR filter 310A of the first path 300A receives and filters the in-phase component of the output signal of the interpolator (INT), whereas the FIR filter 310B of the second path 300B receives and filters a phase-shifted component of the output signal of the interpolator (INT). The phase-shifted component can be obtained through the time shifter 340, such as an interpolator, to shift the output signal of the interpolator (INT) by a value of its time period (T). That value can be determined to be close to a zero crossing (i.e., close to an equilibrium point) of the TEDC because the periodic TEDC, which is not always a sinusoidal function, is more linear in the vicinity of the equilibrium point. Thus, the output signal of the interpolator (INT) can be shifted by, for example, an eighth of its time period (T), namely by T/8, before entering the FIR filter 310B.

In this selection circuit 300, the FIR filters 310A and the FIR filters 310B are selectable FIR filters to be individually tested amongst a plurality of selectable FIR filters. The choice of those selectable FIR filters can be bound to the channel conditions. Thus, the FIR filters 310A in the first path 300A and the FIR filters 310B in the second path 300B can be identical to each other or different from each other.

The resulting filtered signals (x) in each first and second path 300A, 300B are then respectively sent to the phase detectors (PDs) 320A, 320B to be converted to a respective phase signal (y) according the same equation (1) as aforementioned, where y denotes the output signal of the respective PDs 320A, 320B, x denotes the input signal of the respective PDs 320A, 320B, the input signal x being samples at a distance of a half period of the symbol period (i.e., of T/2), n denotes a sampling instant and k denotes a selectable parameter to minimize jitter. Each PD 320A, 320B uses one sample per symbol and the parameter k is selected by considering the channel conditions, such as fiber parameters, link length and OSNR, so that the values of k can, for example, be chosen in the range from 0.5 to 2.

The signals output from the PDs 320A, 320B are averaged by respective low-pass filters (LPFs) 330A, 330B to get more accurate estimations of both the jitter at the sampling phase in the first path 300A and the PD gain or TEDC slope in the second path 300B. With respect to the LPF 330A of the first path 300A, the LPF 330B of the second path 300B can have a lower cut-off frequency since the PD gain or TEDC slope estimation requires only a mean value estimation. Conversely and with respect to the LPF 330B of the second path 300B, the jitter estimation at the sampling phase in the first path 300A can have the LPF 330A with a higher cut-off to allow the detection of phase variations, which jitter including the jitter from the TR circuit 200 through the output signal of the interpolator (INT) and the jitter generated by the FIR filter 310A.

The signal output from the LPF 330B of the second path 300B is multiplied at the multiplier 350 by a predetermined coefficient Kb, which weights the PD gain or TEDC slope estimation in order to improve its accuracy and can exhibit a value, for example, less than 1.

The signal A output from the LPF 330A of the first path 300A corresponds to the estimated jitter signal output from the jitter estimator 301, whereas the signal B outputting from the multiplier 350 corresponds to the estimated TEDC slope signal output from the TEDC slope estimator 302. The signals A and B are sent to the first calculator 360, which combines those two signals A, B to calculate a value resulting from the following mathematical formula:

$$\sqrt{\overline{(A - \overline{A})^2}/\overline{B}} \qquad (2)$$

The calculated value is provided to the selector 370 adapted to select as the selected FIR filters, the selectable FIR filters 310A, 310B amongst the plurality of selectable FIR filters that lead to the smallest calculated value, i.e., to the smallest jitter.

The result of the selection is then sent to the second calculator 380 adapted to calculate the coefficients of two filters, such as proportional-integral (PI) filters, and denoted hereafter as adjusted filters.

It should be noted that the circuit (i.e., the TR circuit 200 and the selection circuit 300) as depicted in Fig. 3 can be implemented in a microcontroller and programmed to be used at low speed in order to track the slow variations of the channel conditions over time. Thereby, the selection and calculation process of the respective FIR filters and filter coefficients can be adaptive.

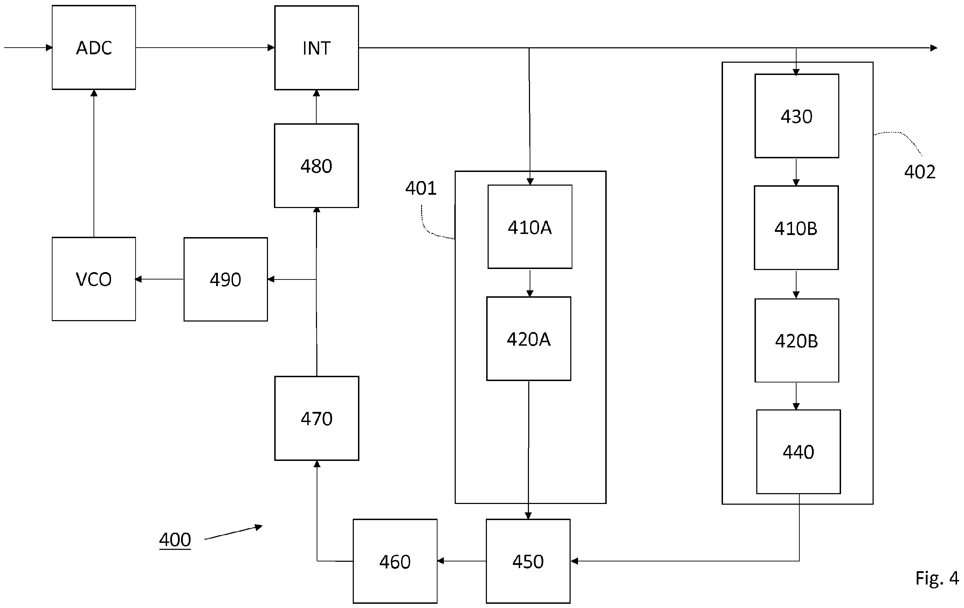

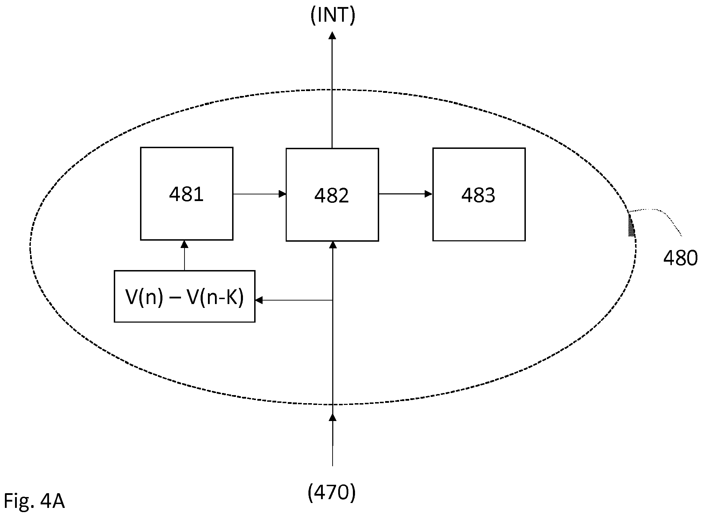

Fig. 4 shows a block diagram of a timing recovery (TR) circuit 400 of a receiver in a transmission system. The TR circuit 400 is configured to operate a timing recovery after selecting the FIR filters 310A, 310B and calculating the coefficients of the PI filters as obtained through the selection circuit 300. The TR circuit 400 comprises a first path 400A and a second path 400B parallel to the first path 400A, through which an input signal passes. The input signal of the TR circuit 400 can be an electrical digital signal (e.g., output from an analog-to-digital converter (ADC)) passing for example through the interpolator (INT) to be interpolated at a sampling phase provided by an output of the TR circuit 400. The first path 400A comprises a jitter estimator 401 adapted to estimate a jitter and output an estimated jitter signal, which in turn comprises a finite impulse response (FIR) filter 410A and a phase detector (PD) 420A. On the other hand, the second path 400B comprises a timing error detector characteristic (TEDC) slope estimator 402 adapted to estimate a slope of the TEDC (i.e., a value of the coefficient Kpd) or a phase detector (PD) gain (i.e., a value of the coefficient Kpd) and output an estimated TEDC slope signal, which in turn comprises a time shifter 430, such as an interpolator, a finite impulse response filter 410B, a phase detector 420B and a low-pass filter 440. In addition, the TR circuit 400 comprises a processor 450, an inner filter 460, an integrator 470, a controller 480 and an outer filter 490.

The FIR filter 410A of the first path 400A receives and filters the in-phase component of the input signal of the TR circuit 400, i.e., the output signal of the interpolator (INT), whereas the FIR filter 410B of the second path 400B receives and filters a phase-shifted component of the input signal of the TR circuit 400. The phase-shifted component can be obtained through the time shifter 430, such as an interpolator, to shift the input signal of the TR circuit 400, i.e., the output signal of the interpolator (INT), by a value of its time period (T). That value can be determined to be close to a zero crossing (i.e., close to an equilibrium point) of the TEDC because the periodic TEDC, which is not always a sinusoidal function, is more linear in the vicinity of the equilibrium point. Thus, the output signal of the interpolator (INT) can be shifted by, for example, an eighth of its time period (T), namely by T/8, before entering the FIR filter 410B.

In this TR circuit 400, the FIR filters 410A and the FIR filters 410B correspond to the respective selected FIR filters obtained through the selection circuit 300 of Fig. 3. Thus, the FIR filters 410A in the first path 400A and the FIR filters 410B in the second path 400B can be identical to each other or different from each other, the FIR filters 410A, 410B being selected to generate the lowest jitter in given channel conditions.

The resulting filtered signals (x) in each first and second path 400A, 400B are then respectively sent to the phase detectors (PDs) 420A, 420B to be converted to a respective phase signal (y) according the same equation (1) as aforementioned, where y denotes the output signal of the respective PDs 420A, 420B, x denotes the input signal of the respective PDs 420A, 420B, the input signal x being samples at a distance of a half period of the symbol period (i.e., of T/2), n denotes a sampling instant and k denotes a selectable parameter to minimize jitter. Each PD 420A, 420B uses one sample per symbol and the parameter k is selected by considering the channel conditions, such as fiber parameters, link length and OSNR, so that the values of k can, for example, be chosen in the range from 0.5 to 2.

The signal (y) outputting from the PD 420B is averaged by the low-pass filter (LPF) 440 to get more accurate estimations of the phase detector (PD) gain or timing error detector characteristic (TEDC) slope in the second path 400B. It should be noted that the LPF 440 can have a low cut-off frequency since the PD gain or TEDC slope estimation requires only a mean value estimation.

The signal A output from the PD 420A of the first path 400A corresponds to the estimated jitter signal output from the jitter estimator 401, whereas the signal Z output from the LPF 440 of the second path 400B corresponds to the estimated TEDC slope signal output from the TEDC slope estimator 402.

The signal Z output from the LPF 440 is received at the processor 450 to be processed with the signal A output from the PD 420A in order to normalize the signal A to have a unity PD gain or TEDC slope (i.e., Kpd = 1). Thereby, an immunity to the variations of the channel conditions can be obtained. In case that the time shift has, for example, a value of T/8, the signal A will be normalized to A/8Z.

The normalized signal output from the processor 450 is sent to the inner filter 460, such as a proportional-integral (PI) filter, which corresponds to the respective adjusted filter obtained through the selection circuit 300 of Fig. 3.

The resulting filtered signal is then accumulated in the integrator 470, such as a phase accumulator of a numerically controlled oscillator (NCO).

The signal output from the integrator 470 is sent to both the controller 480 in order to control the sampling phase of the interpolator (INT), thereby forming an "inner" feedback loop, and also the outer filter 490, thereby forming an "outer" feedback loop.

Fig. 4A shows a block diagram of a controller according to a fourth embodiment of the present invention. As depicted in Fig. 4A, the controller 480 comprises a lock detector 481 adapted to detect, after a given time period, a phase locking of the oscillator, e.g., the VCO, based on a difference between two successive signals, denoted v(n) — v(n-K), output at a predetermined distance K (e.g., 10000 symbols) from the integrator 470. The lock detector 481 is also used in the starting phase during locking to the reference clock. The signal output from the integrator 470 is also sent to a control unit 482 that is adapted to determine a pointer position in the interpolation performed by the interpolator (INT) using information output from the lock detector 481. Usually, an interpolator is required to use more 128 samples to perform interpolation. As it can however buffer three blocks of 128 samples, in a normal operating mode, the interpolator can take, starting from the position of the pointer, 128 samples in the middle and a few additional samples before (e.g., two samples) and after (e.g., two other samples) to do interpolation. Should the pointer be positioned outside the buffer range, the control unit 482 can intervene to have the pointer returned to inside the buffer range. Using information from the control unit 482, a clock management unit 483 is adapted to control all the events related to timing and clocking other elements or blocks in the receiver. For example, the clock of the oscillator, e.g., the VCO, at the receiver side cannot be distributed to DSP blocks responsible for data recovery as long as the oscillator, e.g., the VCO, at the receiver side is not locked to the oscillator, e.g., the VCO, at the transmitter side.

The signal output from the integrator 470 and received at the outer filter 490 corresponds to the respective adjusted filter obtained through the selection circuit 300 of Fig. 3, and is then filtered to obtain a timing control signal. The timing control signal obtained through the TR circuit 400 of Fig. 4 is optimized with respect to the timing control signal obtained through the TR circuit 200 of Fig. 2 and can afterwards be sent to an oscillator, such as a VCO, as depicted in Fig. 4, to control its phase and its frequency. In turn, the oscillator, e.g., the VCO, can generate an enhanced clock to be provided to the ADC, and the equalizer, such as a MLSE, can then be activated by receiving the interpolated signal that also passes through the TR circuit 400. Thereby, an enhanced clock extraction from a noisy and dispersive optical signal can be performed in extremely band-limited systems, such as systems of bandwidth smaller than a quarter of baud rate.

It should be noted that the integrator 470, the controller 480 and the interpolator (INT) can be part of an NCO whose function consists of correcting for fast signal phase variations mainly caused by the imperfections of the transmitter clock source within the optical transceiver. Furthermore, while each PD 420A, 420B uses one sample per symbol, the interpolator (INT) requires more than one sample per symbol to provide acceptable interpolation performance. For example, the interpolator (INT) can use 1.25 or more samples per symbol.

As can be gathered from the above, the "inner" feedback loop enables to track the fast signal phase variations, while the "outer" feedback loop enables to acquire the frequency offset between the respective oscillators, e.g., the VCOs, at the transmitter and receiver side. In addition, the communication with the oscillator, e.g., the VCO, is often performed by a synchronous serial data protocol, such as a serial peripheral interface (SPI). For all those reasons, the "inner" feedback loop is configured to operate faster than the "outer" feedback loop.

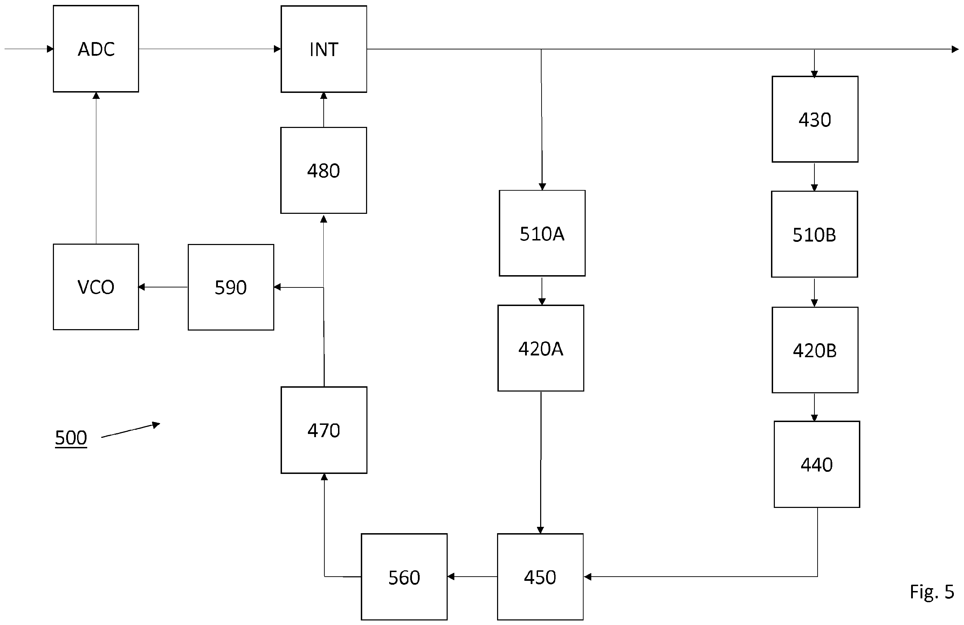

Fig. 5 shows an adaptive TR circuit 500 derived from the TR circuit 400, in which the FIR filters 410A, 410B have been replaced by selectable filters, denoted as FIR filters 510A, 510B, and the inner and outer filters 460, 490 have been replaced by adjustable filters, denoted as filters 560, 590. The FIR filters 510A, 510B can be selected to fit the channel conditions and minimize the jitter through any selection process, while the inner and outer filters 560, 590 can have their coefficients calculated or adjusted to also fit the channel conditions and minimize the jitter through any process of calculating filter coefficients.

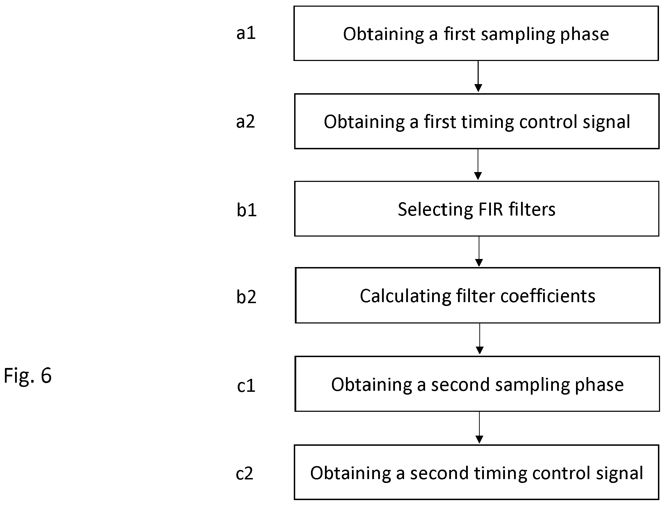

Fig. 6 shows a schematic flow diagram for recovering timing from a signal of a receiver in a transmission system, wherein the steps (a1), (a2), (b1), (b2), (c1) and (c2) are disclosed.

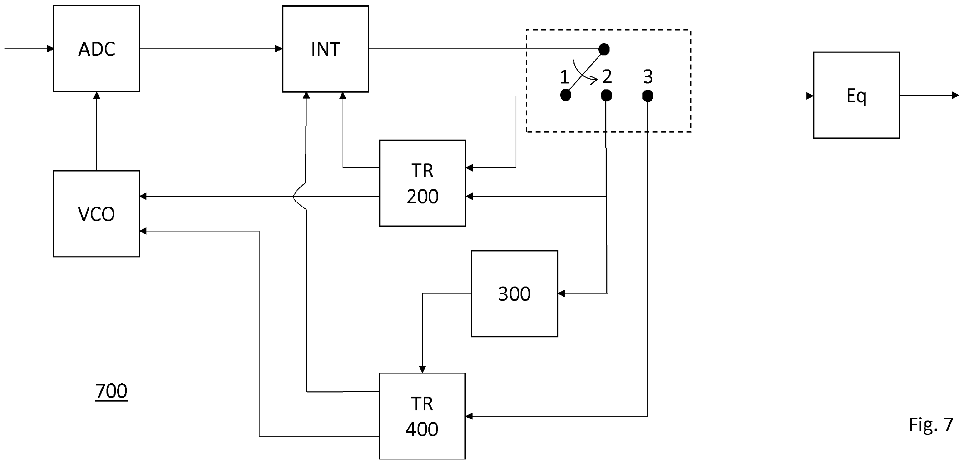

Fig. 7 in conjunction with Fig. 6 shows an explanatory block diagram of a timing recovery system 700 comprising the TR circuit 200 of Fig.2, the selection circuit 300 of Fig. 3 and the TR circuit 400 of Fig. 4, wherein their sequential use is schematically indicated by a switch (depicted by the dashed line) whose first switch position, denoted as 1, refers to the steps (a1) and (a2) of Fig. 6, second switch position, denoted as 2, refers to the steps (b1) and (b2) of Fig. 6, and third switch position, denoted as 3, refers to the steps (c1) and (c2) of Fig. 6. In more details, only the TR circuit 200 is turned on when the switch is on the first switch position (1). Thereby, a first sampling phase and a first timing control signal can be obtained. When the switch is on the second switch position (2), the TR circuit 200 remains turned on and the selection unit 300 in turn is turned on. Thereby, the FIR filters can be selected and the filter coefficients can be calculated. Once the selected FIR filters and the calculated filter coefficients are obtained, the selection unit 300 transmits the corresponding information to the TR circuit 400 in stand-by mode in order to set its configuration as regards its FIR filters and its inner and outer filters (e.g., PI filters). When the switch is on the third switch position (3), only the TR circuit 400, which is configured with its selected FIR filters and its adjusted filters, is turned on. Thereby, an optimized second sampling phase and second timing control signal with respect to the first sampling phase and the first timing control signal can be obtained.

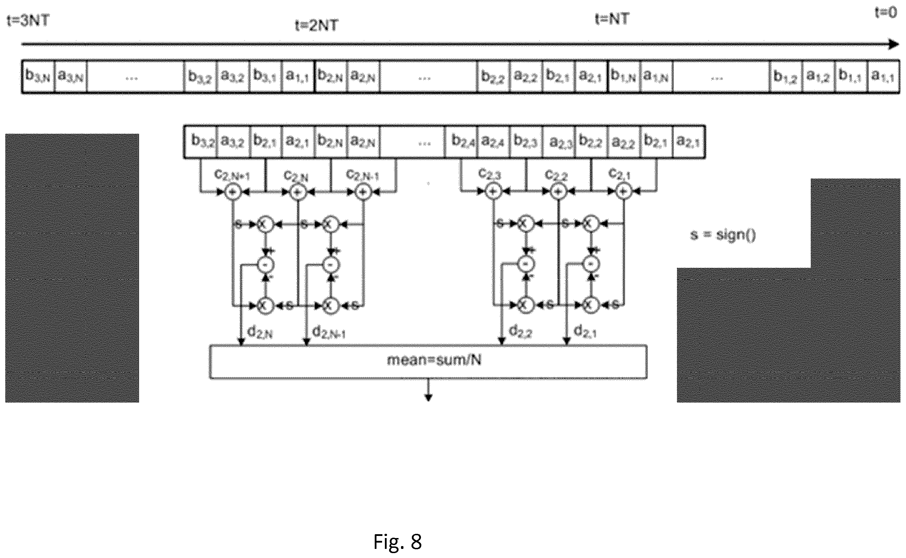

At high baud rates, data must be processed in parallel. After converting the data from an analog to a digital domain through an ADC, the sampled and quantized data are grouped in data blocks of N symbols. Fig. 8 shows a parallel implementation of finite impulse response filters (FIRs) and phase detectors (PDs) when a two-fold oversampling is employed. As found herein, two samples within one symbol interval are denoted by a and b. As the total number of samples per block is 2N, the depicted three consecutive data blocks thus represent a total of 6N samples. Each FIR filter amongst N filters per block can be the simplest one with a transfer function 1+D where D represents a delay of the symbol period (T). Only the b samples are filtered in order to sample data at the optimum phase. Each PD amongst N PDs per block is also the simplest one and its output is described by the aforementioned equation (1) when k = 0. The maximum number of PD outputs per data block is equal to N. The PD outputs denoted by d are summed up and divided by N, which may be easy to do when N is a power of 2.

Moreover, high baud rates (e.g., data rates going beyond 200 Gbit/s) require the use of multiple optical carriers to achieve more traffic. For example, the ADC speed capability is limited to correctly perform the analog-to-digital conversion at drastically increasing baud rates. A solution to achieve such a huge data traffic is to use a multi-wavelength transmission system.

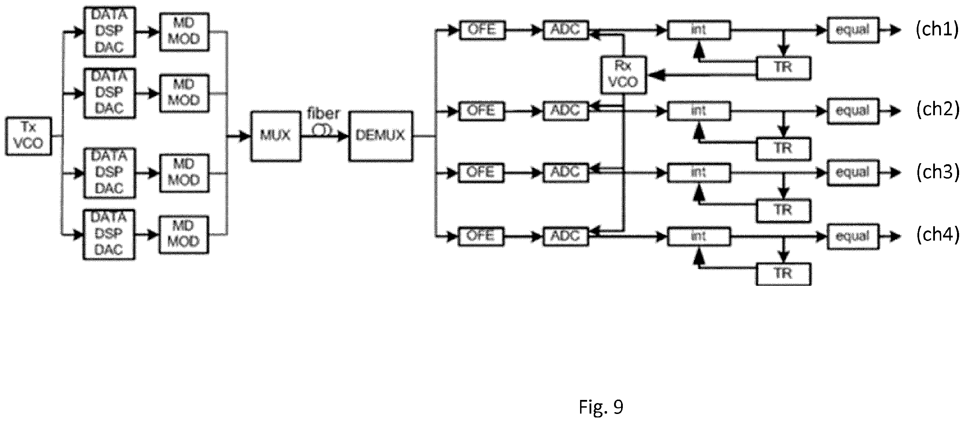

Fig. 9 shows a block diagram of a timing recovery circuit 900 of a receiver in a multi-wavelength transmission system having a plurality of channels, wherein four wavelengths can carry a total of N bauds at a maximum data rate of N/4 bauds per wavelength.

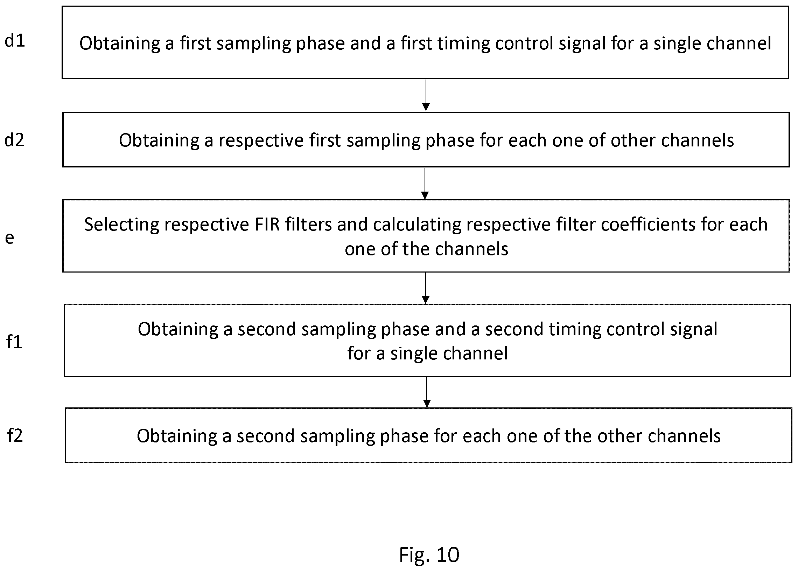

Fig. 10 shows a schematic flow diagram for recovering timing from a signal of a receiver in a multi-wavelength transmission system having a plurality of channels, wherein the steps (d1), (d2), (e), (f1) and (f2) are disclosed.

At the transmitter side, four data streams are supplied to a respective process unit (PU), in which each data stream is processed through a respective digital signal processing (DSP) to be converted to a digital signal, each resulting digital signal being then converted to an analog signal through a digital-to-analog converter (DAC). As can be seen, all those four process units use the same clock generated by a single transmitter oscillator, e.g., a transmitter voltage-controlled oscillator (Tx VCO). The electro-optical conversion is operated through the modulator drivers (MD) and the modulators (MOD). The resulting four optical signals are then multiplexed through an optical multiplexer (MUX) and the multiplexed optical signal is transmitted over a single optical fiber link.

At the receiver side, the multiplexed optical signal is demultiplexed through an optical demultiplexer (DEMUX) by being split into four optical signals of different wavelengths respectively transmitted to four separate channels. As depicted in Fig. 9, each channel comprises an optical front end (OFE) adapted to convert a received optical signal to an electrical signal, an analog-to-digital converter (ADC) adapted to convert the electrical signal to a digital signal, an interpolator (INT) adapted to interpolate the digital signal, a timing recovery (TR) circuit adapted to receive the interpolated signal and control the sampling phase of the interpolator, and an equalizer, e.g., a MLSE, adapted to receive the interpolated signal after obtaining a second timing control signal, as will be explained hereafter. As can be also gathered from Fig. 9, a single TR circuit is adapted to control the phase and the frequency of a single receiver oscillator, e.g., a VCO, and all the channels share a single receiver VCO (Rx VCO), which is adapted to receive a timing control signal from the single TR circuit and provide a same clock signal to each ADC.

More specifically, after detecting an electrical signal, only a single channel (e.g., the first channel, denoted as channel 1, which owns the single TR circuit adapted to control an oscillator) is processed, starting with the first step (d1) of Fig. 10. Thus, the respective interpolated signal is provided to the input of the respective TR circuit (TR), denoted as first timing recovery (TR) circuit and corresponding to the TR circuit 200 of Fig. 2. In that first step (d1), the first TR circuit TR1 is adapted to control the phase and the frequency of the single Rx VCO through outputting a first timing control signal and also adapted to control the sampling phase of the respective interpolator (INT). Once the single Rx VCO is locked to the phase and frequency extracted from the signal received at the single channel (e.g., the first channel: ch1), all the ADCs (i.e., the four ADCs) and DSP blocks (not shown) receive a same first clock generated by the single Rx VCO.

Referring to the second and third steps (d2, e) of Fig. 10, all the channels are now processed and similarly to the first step (d1), the respective TR circuits (TRs) correspond to the configuration of the respective first TR circuits. Thus, each interpolated signal is distributed to the respective first TR circuit, which is adapted to control the sampling phase of the respective interpolator in the second step (d2), and also distributed to a respective selection unit to perform a selection of finite impulse response (FIR) filters leading to a minimized jitter and to then calculate filter coefficients in the third step (e). As the channels may experience different imperfections, the selected FIRs and the calculated filter coefficients may be different from a channel to another.

Referring to the fourth and fifth steps (f1, f2) of Fig. 10, the configuration of the first TR circuits is modified in such a manner that the respective TR circuits (TR) now correspond to the configuration of respective circuits that use the respective selected FIRs and the respective adjusted filters. Such modified first TR circuits are denoted as second timing recovery (TR) circuits and correspond individually to the TR circuit of Fig. 4. Firstly, only a single channel (i.e., the first channel: ch1, which owns the single TR circuit adapted to control an oscillator) is processed in the fourth step (f1). Thus, the respective interpolated signal is provided to the input of the respective TR circuit (i.e., the second TR circuit), which is adapted to control the phase and the frequency of the single Rx VCO through outputting a second timing control signal and also adapted to control the sampling phase of the respective interpolator. Once the single Rx VCO is locked to the extracted phase and frequency from the signal received at the single channel (i.e., the first channel: ch1), all the ADCs (i.e., the four ADCs) and DSP blocks (not shown) receive in replacement of the first clock, a same second clock generated by the single Rx VCO. Secondly, all the channels are processed in the fifth step (f2) such that each interpolated signal is distributed to the respective second TR circuit (TR), which is adapted to control and adjust (e.g., through compensating for any delay, jitter, etc.) the sampling phase of the respective interpolator (INT), and also distributed to the respective equalizer (equal) in order to activate it. Thereby, a same enhanced clock tone can be obtained in all the channels (ch1-ch4).

It can be further noted that such a multi-wavelength optical transceiver also presents the advantage of saving several electrical and optical components, for example by using a total of only two instead of eight VCOs, i.e., a single Tx VCO and a single Rx VCO.

In summary, the present invention relates to a system and method for recovering timing from a signal of a direct detection receiver in an optical transmission system. In a first step, a first timing control signal allowing the receiver oscillator to generate a first clock is obtained through a first timing recovery circuit. In a second step, the input signal of the first timing recovery circuit is provided to a selection unit to perform a selection of finite impulse response filters leading to a minimized jitter and then calculate filter coefficients. In a third step, a second timing control signal allowing the receiver oscillator to generate a second clock in replacement of the first clock is obtained through a second timing recovery circuit using the selected finite impulse response filters and the calculated filter coefficients. Thereby, an enhanced clock extraction from a noisy and dispersive signal can be performed.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to a person skilled in the art. Such modifications may involve other features which are already known in the art and which may be used instead of or in addition to features already described herein. In particular, the transmission system is not restricted to an optical transmission system. Rather, the present invention can be applied to any wired or wireless transmission system. The receiver device of the proposed system can be implemented in discrete hardware or based on software routines for controlling signal processors at the reception side.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

Although the present invention has been described with reference to specific features and embodiments thereof, it is evident that various modifications and combinations can be made thereto without departing from the scope of the invention. The specification and drawings are, accordingly, to be regarded simply as an illustration of the invention as defined by the appended claims.

**Claims**

1. A method for recovering timing from a signal of a receiver in a transmission system, the method comprising the following steps:

   (a1) in a first path:

   receiving an input signal;
   filtering the input signal;
   converting the filtered input signal to a first phase detection signal; and
   filtering the first phase detection signal;
   in a second path parallel to the first path:

   receiving the input signal;
   converting the input signal to a quadrature-phase detection signal;
   filtering the quadrature-phase detection signal;
   converting the filtered quadrature-phase detection signal to a second phase detection signal; and
   filtering the second phase detection signal;
   wherein method step (a1) further comprises:

   determining an angle between the first phase detection signal and the second phase detection signal;
   outputting an angle signal derived from the determined angle;
   unwrapping a phase value of the angle signal;
   filtering the unwrapped angle signal;
   accumulating the filtered unwrapped angle signal; and
   outputting a first sampling phase to an interpolator based on the accumulated filtered unwrapped angle signal;

(a2) filtering the accumulated filtered unwrapped angle signal, thereby arriving at a first timing control signal, and outputting the first timing control signal;

(b1) selecting a first and second finite impulse response filter amongst a plurality of selectable finite impulse response filters, wherein the selecting the first and second finite impulse response filter amongst the plurality of selectable finite impulse response filters comprises

in a third path:

receiving the input signal;
estimating a jitter using a first selectable finite impulse response filter amongst the plurality of selectable finite impulse response filters, wherein:

the step of estimating the jitter comprises:

filtering the input signal through the first selectable finite impulse response filter;
converting the filtered input signal to a third phase detection signal; and
averaging the third phase detection signal into an averaged third phase detection signal, the averaged third phase detection signal corresponding to a first estimated jitter signal;
and after the estimation of the jitter, outputting the first estimated jitter signal;

in a fourth path parallel to the third path:
receiving the input signal;
estimating a first slope of a first timing error detector characteristic, TEDC, using a second selectable finite impulse response filter amongst the plurality of selectable finite impulse response filters, wherein the step of estimating the first slope of the first timing error detector characteristic, TEDC, comprises:

shifting the input signal by a predetermined portion of its time period;
filtering the shifted input signal through the second selectable finite impulse response filter;
converting the filtered shifted input signal to a fourth phase detection signal;
averaging the fourth phase detection signal into an averaged fourth phase detection signal, the averaged fourth phase detection signal corresponding to a first estimated TEDC slope signal, and outputting the first estimated TEDC slope signal;

wherein the step (b1) further comprises:

multiplying the first estimated TEDC slope signal by a predetermined weighting coefficient; and calculating the following mathematical formula:

$$\sqrt{\overline{(A - \overline{A})^2}/\overline{B}} \tag{1}$$

where A denotes the first estimated jitter signal and B denotes the resulting signal of multiplying the first estimated TEDC slope signal by a predetermined weighting coefficient; and
selecting as the selected first and second finite impulse response filters, the respective first and second selectable finite impulse response filters amongst the plurality of selectable finite impulse response filters that enable to obtain a minimum value of the mathematical formula (1);

(b2) calculating the coefficients of a first and second filter in order to obtain an adjusted first and second filter, wherein the calculating the coefficients of the first and second filter in order to obtain the adjusted first and second filter comprises:
calculating the coefficients of the first and second filters based on the estimated first slope of the TEDC obtained by using the selected second finite impulse response filter;

(c1) in a fifth path:

receiving the input signal;
estimating a jitter, wherein the step of estimating the jitter comprises:

filtering the input signal through the selected first finite impulse response filter; and
converting the filtered input signal to a fifth phase detection signal corresponding to a second estimated jitter signal; and
after estimating the jitter, outputting a second estimated jitter signal;

in a sixth path parallel to the fifth path:

receiving the input signal;
estimating a second slope of a second timing error detector characteristic, TEDC,

the step of estimating the second slope of the second timing error detector characteristic, TEDC, comprises:

shifting the input signal by a predetermined portion of its time period;
filtering the shifted input signal through the selected second finite impulse response filter; and
converting the filtered shifted input signal to a sixth phase detection signal; and,
after the estimation of the second slope of the second TEDC, outputting a second estimated TEDC slope signal;

wherein the step (c1) further comprises:

normalizing the second estimated jitter signal with respect to the second estimated TEDC slope signal in order to obtain a unity slope of the TEDC;
receiving the normalized second estimated jitter signal at the adjusted first filter;
filtering the normalized second estimated jitter signal through the adjusted first filter;
accumulating the filtered normalized second estimated jitter signal;
receiving the accumulated filtered normalized second estimated jitter signal at a controller; and
controlling a second sampling phase output by an interpolator through the controller **based on the accumulated filtered normalized second estimated jitter signal;**

(c2) receiving the accumulated filtered normalized second estimated jitter

signal at the adjusted second filter;
filtering the accumulated filtered normalized second estimated jitter signal through the adjusted second filter; and
outputting a second timing control signal from the adjusted second filter.

2. A system for recovering timing from a signal of a receiver in a transmission system, the system comprising:

a first apparatus (200) adapted to perform method steps (a1) and (a2);
a selection unit (300) adapted to perform method steps (b1) and (b2); and
a second apparatus (400) adapted to perform method steps (c1) and (c2).

3. A computer program comprising program code for performing the method according to claim 1 when executed on a computer.

**Patentansprüche**

1. Verfahren zur Wiederherstellung des Timings aus einem Signal eines Empfängers in einem Übertragungssystem, wobei das Verfahren die folgenden Schritte umfasst:

(a1) in einem ersten Pfad:

Empfangen eines Eingangssignals;
Filtern des Eingangssignals;
Umwandeln des gefilterten Eingangssignals in ein erstes Phasendetektionssignal; und
Filtern des ersten Phasendetektionssignals;
in einem zum ersten Pfad parallelen zweiten Pfad:

Empfangen des Eingangssignals;
Umwandeln des Eingangssignals in ein Quadraturphasendetektionssignal;
Filtern des Quadraturphasendetektionssignals;
Umwandeln des gefilterten Quadraturphasendetektionssignals in ein zweites Phasendetektionssignal; und
Filtern des zweiten Phasendetektionssignals;

wobei der Verfahrensschritt (a1) ferner Folgendes umfasst:

Bestimmen eines Winkels zwischen dem ersten Phasendetektionssignal und dem zweiten Phasendetektionssignal;
Ausgeben eines aus dem bestimmten Winkel abgeleiteten Winkelsignals;
Auswickeln eines Phasenwerts des Winkelsignals;
Filtern des ausgewickelten Winkelsignals;
Akkumulieren des gefilterten ausgewickelten Winkelsignals; und
Ausgeben einer ersten Abtastphase an einen Interpolator auf der Basis des akkumulierten gefilterten ausgewickelten Winkelsignals;

(a2) Filtern des akkumulierten gefilterten ausgewickelten Winkelsignals, um dadurch zu einem ersten Timingsteuersignal zu kommen, und Ausgeben des ersten Timingsteuersignals;
(b1) Auswählen eines ersten und zweiten Filters mit endlicher Impulsantwort unter mehreren auswählbaren Filtern mit endlicher Impulsantwort, wobei das Auswählen des ersten und zweiten Filters mit endlicher Impulsantwort unter den mehreren auswählbaren Filtern mit endlicher Impulsantwort Folgendes umfasst:

in einem dritten Pfad:

Empfangen des Eingangssignals;
Schätzen eines Jitters unter Verwendung eines ersten auswählbaren Filters mit endlicher Impulsantwort unter den mehreren auswählbaren Filter mit endlicher Impulsantwort, wobei

der Schritt des Schätzens des Jitters Folgendes umfasst:

Filtern des Eingangssignals mittels des ersten auswählbaren Filters mit endlicher Impulsantwort;
Umwandeln des gefilterten Eingangssignals in ein drittes Phasendetektionssignal; und
Mitteln des dritten Phasendetektionssignals zu einem gemittelten dritten Phasendetektionssignal, wobei das gemittelte dritte Phasendetektionssignal einem ersten geschätzten Jittersignal entspricht; und Ausgeben des ersten geschätzten Jittersignals nach dem Schätzen des Jitters;

in einem zum dritten Pfad parallelen vierten Pfad:
Empfangen des Eingangssignals;
Schätzen einer ersten Steigung einer ersten Timingfehler-Detektorkurve TEDC unter Verwendung eines zweiten ausführbaren Filters mit endlicher Impulsantwort unter den mehreren auswählbaren Filtern mit endlicher Impulsantwort, wobei der Schritt des Schätzens der ersten Steigung der ersten Timingfehler-Detektorkurve TEDC Folgendes umfasst:

Verschieben des Eingangssignals um einen vorbestimmten Teil seines Zeitraums;
Filtern des verschobenen Eingangssignals mittels des zweiten ausführbaren Filters mit endlicher Impulsantwort;
Umwandeln des gefilterten verschobenen Eingangssignals in ein viertes Phasendetektionssignal;
Mitteln des vierten Phasendetektionssignals zu einem gemittelten vierten Phasendetektionssignal, wobei das gemittelte vierte Phasendetektionssignal einem ersten geschätzten TEDC-Steigungssignal entspricht, und Ausgeben des ersten geschätzten TEDC-Steigungssignals;

wobei Schritt (b1) ferner Folgendes umfasst:

Multiplizieren des ersten geschätzten TEDC-Steigungssignals mit einem vorbestimmten Gewichtungskoeffizienten; und Berechnen der folgenden mathematischen Formel:

$$\sqrt{(A - \bar{A})^2 / \bar{B}}$$

(1)

wobei A das erste geschätzte Jittersignal bedeutet und B das resultierende Signal des Multiplizierens des ersten geschätzten TEDC-Steigungssignals mit einem vorbestimmten Gewichtungskoeffizienten bedeutet; und

Auswählen des jeweiligen ersten und zweiten auswählbaren Filters mit endlicher Impulsantwort unter den mehreren auswählbaren Filtern mit endlicher Impulsantwort, die es ermöglichen, einen minimalen Wert der mathematischen Formel (1) zu erhalten, als das ausgewählte erste und zweite Filter mit endlicher Impulsantwort;

(b2) Berechnen der Koeffizienten eines ersten und zweiten Filters, um ein justiertes erstes und zweites Filter zu erhalten, wobei das Berechnen der Koeffizienten des ersten und zweiten Filters, um das justierte erste und zweite Filter zu erhalten, Folgendes umfasst:

Berechnen der Koeffizienten des ersten und zweiten Filters auf der Basis der geschätzten ersten Steigung der TEDC, die durch Verwendung des ausgewählten zweiten Filters mit endlicher Impulsantwort erhalten wird;

(c1) in einem fünften Pfad:

Empfangen des Eingangssignals;
Schätzen eines Jitters, wobei der Schritt des Schätzens des Jitters Folgendes umfasst:

Filtern des Eingangssignals mittels des ausgewählten ersten Filters mit endlicher Impulsantwort; und
Umwandeln des gefilterten Eingangssignals in ein fünftes Phasendetektionssignal entsprechend einem zweiten geschätzten Jittersignal; und
Ausgeben eines zweiten geschätzten Jittersignals nach dem Schätzen des Jitters;

in einem zum fünften Pfad parallelen sechsten Pfad:

Empfangen des Eingangssignals;
Schätzen einer zweiten Steigung einer zweiten Timingfehlerdetektorkurve TEDC,

wobei der Schritt des Schätzens der zweiten Steigung der zweiten Timingfehlerdetektorkurve TEDC Folgendes umfasst:

Verschieben des Eingangssignals um einen vorbestimmten Teil seines Zeitraums;
Filtern des verschobenen Eingangssignals mittels des ausgewählten zweiten Filters mit endlicher Impulsantwort; und
Umwandeln des gefilterten verschobenen Eingangssignals in ein sechstes Phasendetektionssignal; und
Ausgeben des zweiten geschätzten TEDC-Steigungssignals nach der Schätzung der zweiten Steigung der zweiten TEDC;

wobei Schritt (c1) ferner Folgendes umfasst:

Normieren des zweiten geschätzten Jittersignals mit Bezug auf das zweite geschätzte TEDC-Steigungssignal, um eine Einheitssteigung der TEDC zu erhalten;
Empfangen des normierten zweiten geschätzten Jittersignals in dem justierten ersten Filter;
Filtern des normierten zweiten geschätzten Jittersignals mittels des justierten ersten Filters;
Akkumulieren des gefilterten normierten zweiten geschätzten Jittersignals;
Empfangen des akkumulierten gefilterten normierten zweiten geschätzten Jittersignals in einer Steuerung; und
Steuern einer zweiten Abtastphase, die durch einen Interpolator ausgegeben wird, mittels der Steuerung **auf der Basis des akkumulierten gefilterten normierten zweiten geschätzten Jittersignals;**

(c2) Empfangen des akkumulierten gefilterten normierten zweiten geschätzten Jittersignals in dem justierten zweiten Filter;

Filter des akkumulierten gefilterten normierten zweiten geschätzten Jittersignals mittels des justierten zweiten Filters; und
Ausgeben eines zweiten Timingsteuersignals aus dem justierten zweiten Filter.

2. System zur Wiederherstellung des Timings aus einem Signal eines Empfängers in einem Übertragungssystem, wobei das System Folgendes umfasst:

eine zum Ausführen der Verfahrensschritte (a1) und (a2) ausgelegte erste Vorrichtung (200);
eine zum Ausführen der Verfahrensschritte (b1) und (b2) ausgelegte Auswahleinheit (300); und
eine zum Ausführen der Verfahrensschritte (c1) und (c2) ausgelegte zweite Vorrichtung (400).

3. Computerprogramm mit Programmcode zum Ausführen des Verfahrens nach Anspruch 1, wenn es auf einem Computer ausgeführt wird.

**Revendications**

1. Procédé de récupération du rythme à partir d'un signal d'un récepteur dans un système de transmission, le procédé comportant les étapes suivantes :

(a1) sur un premier trajet :

recevoir un signal d'entrée ;
filtrer le signal d'entrée ;
convertir le signal d'entrée filtré en un premier signal de détection de phase ; et
filtrer le premier signal de détection de phase ;
sur un deuxième trajet parallèle au premier trajet :

recevoir le signal d'entrée ;
convertir le signal d'entrée en un signal de détection en quadrature de phase ;
filtrer le signal de détection en quadrature de phase ;
convertir le signal filtré de détection en quadrature de phase en un deuxième signal de détection de phase ; et
filtrer le deuxième signal de détection de phase ;

l'étape (a1) de procédé comportant en outre les actions consistant à :

déterminer un angle entre le premier signal de détection de phase et le deuxième signal de détection de phase ;
délivrer un signal d'angle tiré de l'angle déterminé ;
dérouler une valeur de phase du signal d'angle ;
filtrer le signal d'angle déroulé ;
cumuler le signal d'angle déroulé filtré ; et
délivrer une première phase d'échantillonnage à un interpolateur d'après le signal d'angle déroulé filtré cumulé ;

(a2) filtrer le signal d'angle déroulé filtré cumulé, aboutissant ainsi à un premier signal de commande de rythme, et délivrer le premier signal de commande de rythme ;
(b1) sélectionner un premier et un deuxième filtre à réponse impulsionnelle finie parmi une pluralité de filtres à réponse impulsionnelle finie sélectionnables, la sélection du premier et du deuxième filtre à réponse impulsionnelle finie parmi la pluralité de filtres à réponse impulsionnelle finie sélectionnables comportant les actions consistant

sur un troisième trajet :

à recevoir le signal d'entrée ;
à estimer une gigue à l'aide d'un premier filtre à réponse impulsionnelle finie sélectionnable parmi la pluralité de filtres à réponse impulsionnelle finie sélectionnables :

l'étape d'estimation de la gigue comportant les actions consistant à :
filtrer le signal d'entrée à travers le premier filtre à réponse impulsionnelle finie sélectionnable ;
convertir le signal d'entrée filtré en un troisième signal de détection de phase ; et
moyenniser le troisième signal de détection de phase pour donner un troisième signal moyennisé de détection de phase, le troisième signal moyennisé de détection de phase correspondant à un premier signal de gigue estimée ;
et après l'estimation de la gigue, délivrer le premier signal de gigue estimée ;

sur un quatrième trajet parallèle au troisième trajet :

recevoir le signal d'entrée ;
estimer une première pente d'une première caractéristique de détecteur d'erreur de rythme, TEDC, à l'aide d'un deuxième filtre à réponse impulsionnelle finie sélectionnable parmi la pluralité de filtres à réponse impulsionnelle finie sélectionnables, l'étape d'estimation de la première pente de la première caractéristique de détecteur d'erreur de rythme, TEDC, comportant les actions consistant à :

décaler le signal d'entrée d'une portion prédéterminée de sa période ;
filtrer le signal d'entrée décalé à travers le deuxième filtre à réponse impulsionnelle finie sélectionnable ;
convertir le signal d'entrée décalé filtré en un quatrième signal de détection de phase ;
moyenniser le quatrième signal de détection de phase pour donner un quatrième signal moyennisé de détection de phase, le quatrième signal moyennisé de détection de phase correspondant à un premier signal de pente estimée de TEDC, et délivrer le premier signal de pente estimée de TEDC ;

l'étape (b1) comportant en outre les actions consistant à :

multiplier le premier signal de pente estimée de TEDC par un coefficient de pondération prédéterminé ;
et calculer la formule mathématique suivante :

$$\sqrt{\overline{(A - \overline{A})^2}} / \overline{B} \qquad (1)$$

où A dénote le premier signal de gigue estimée et B dénote le signal résultant de la multiplication du premier signal de pente estimée de TEDC par un coefficient de pondération prédéterminé ; et
sélectionner en tant que premier et deuxième filtres à réponse impulsionnelle finie sélectionnés, les premier et deuxième filtres respectifs à réponse impulsionnelle finie sélectionnables parmi la pluralité de filtres à réponse impulsionnelle finie sélectionnables qui permettent d'obtenir une valeur minimum de la formule mathématique (1) ;

(b2) calculer les coefficients d'un premier et d'un deuxième filtre afin d'obtenir un premier et un deuxième filtre ajusté, le calcul des coefficients du premier et du deuxième filtre afin d'obtenir le premier et le deuxième filtre ajusté comportant les actions consistant à :
calculer les coefficients des premier et deuxième filtres d'après la première pente estimée de la TEDC obtenue en utilisant le deuxième filtre à réponse impulsionnelle finie sélectionné ;
(c1) sur un cinquième trajet :

recevoir le signal d'entrée ;
estimer une gigue, l'étape d'estimation de la gigue comportant les actions consistant à :

filtrer le signal d'entrée à travers le premier filtre à réponse impulsionnelle finie sélectionné ; et
convertir le signal d'entrée filtré en un cinquième signal de détection de phase correspondant à un deuxième signal de gigue estimée ; et
après l'estimation de la gigue, délivrer un deuxième signal de gigue estimée ;

sur un sixième trajet parallèle au cinquième trajet :

recevoir le signal d'entrée ;
estimer une deuxième pente d'une deuxième caractéristique de détecteur d'erreur de rythme, TEDC, l'étape d'estimation de la deuxième pente de la deuxième caractéristique de détecteur d'erreur de rythme, TEDC, comportant les actions consistant à :

décaler le signal d'entrée d'une portion prédéterminée de sa période ;
filtrer le signal d'entrée décalé à travers le deuxième filtre à réponse impulsionnelle finie sélectionné ; et
convertir le signal d'entrée décalé filtré en un sixième signal de détection de phase ; et,
après l'estimation de la deuxième pente de la deuxième TEDC, délivrer un deuxième signal de pente estimée de TEDC ;

l'étape (c1) comportant en outre les actions consistant à :

normaliser le deuxième signal de gigue estimée par rapport au deuxième signal de pente estimée de TEDC afin d'obtenir une pente unitaire de la TEDC ;
recevoir le deuxième signal normalisé de gigue estimée au niveau du premier filtre ajusté ;
filtrer le deuxième signal normalisé de gigue estimée à travers le premier filtre ajusté ;
cumuler le deuxième signal normalisé filtré de gigue estimée ;
recevoir le deuxième signal normalisé filtré cumulé de gigue estimée au niveau d'un moyen de commande ; et
commander une deuxième phase d'échantillonnage délivrée par un interpolateur par l'intermédiaire du moyen de commande d'après le deuxième signal normalisé filtré cumulé de gigue estimée ;

(c2) recevoir le deuxième signal normalisé filtré cumulé de gigue estimée au niveau du deuxième filtre ajusté ;

filtrer le deuxième signal normalisé filtré cumulé de gigue estimée à travers le deuxième filtre ajusté ; et
délivrer un deuxième signal de commande de rythme à partir du deuxième filtre ajusté.

2. Système de récupération de rythme à partir d'un signal d'un récepteur dans un système de transmission, le système comportant :

un premier appareil (200) prévu pour réaliser les étapes (a1) et (a2) de procédé ;
une unité (300) de sélection prévue pour réaliser les étapes (b1) et (b2) de procédé ; et
un deuxième appareil (400) prévu pour réaliser les étapes (c1) et (c2) de procédé.

3. Programme d'ordinateur comportant du code de programme destiné à réaliser le procédé selon la revendication 1 lorsqu'il est exécuté sur un ordinateur.

Fig. 1

Fig. 2

Fig. 3

Fig. 4

EP 3 433 952 B1

(INT)

481 → 482 → 483

V(n) − V(n-K)

480

(470)

Fig. 4A

Fig. 5

a1 Obtaining a first sampling phase

a2 Obtaining a first timing control signal

b1 Selecting FIR filters

b2 Calculating filter coefficients

c1 Obtaining a second sampling phase

c2 Obtaining a second timing control signal

Fig. 6

Fig. 7

700

$s = \text{sign}()$

mean=sum/N

t=0

t=NT

t=2NT

t=3NT

Fig. 8

Fig. 9

| d1 | Obtaining a first sampling phase and a first timing control signal for a single channel |
|---|---|

↓

| d2 | Obtaining a respective first sampling phase for each one of other channels |
|---|---|

↓

| e | Selecting respective FIR filters and calculating respective filter coefficients for each one of the channels |
|---|---|

↓

| f1 | Obtaining a second sampling phase and a second timing control signal for a single channel |
|---|---|

↓

| f2 | Obtaining a second sampling phase for each one of the other channels |
|---|---|

Fig. 10

**EP 3 433 952 B1**

**REFERENCES CITED IN THE DESCRIPTION**

**Patent documents cited in the description**

- WO 2016012035 A1
- WO 2014194940 A1
- WO 2016012036 A1